# EUROPÄISCHE PATENTSCHRIFT

(11) **EP 2 117 857 B1**
(45) Veröffentlichungstag und Bekanntmachung des Hinweises auf die Patenterteilung: **17.08.2011**
(21) Anmeldenummer: 08716316.8
(22) Anmeldetag: 06.03.2008
(51) Int. Cl.: B60H 1/00

(54) **VERFAHREN ZUR VORKLIMATISIERUNG EINES KRAFTFAHRZEUGS IM STILLSTAND**
METHOD FOR PRE-CLIMATIZING A STOPPED MOTOR VEHICLE
DISPOSITIF DE PRECLIMATISATION D'UN VEHICULE A L'ARRET

(30) Priorität: 15.03.2007 DE 102007012421
(43) Veröffentlichungstag der Anmeldung: 18.11.2009
(73) Patentinhaber: Bayerische Motoren Werke Aktiengesellschaft, 80809 München (DE)
(72) Erfinder: OSTERMEIER, Ralph, 85395 Wolfersdorf (DE); SATZGER, Peter, 86899 Landsberg am Lech (DE); GERSTENBRANDT, Georg, 80639 München (DE)
(86) Internationale Anmeldenummer: PCT/EP2008/001801
(87) Internationale Veröffentlichungsnummer: WO 2008/110298

(56) Entgegenhaltungen:
- DE-A1- 10 326 596
- DE-A1- 19 731 071
- FR-A- 2 818 197
- US-A- 5 361 593
- US-B2- 7 055 340

## Beschreibung

Die Erfindung bezieht sich auf ein Verfahren zur Vorklimatisierung eines Kraftfahrzeugs im Stillstand mittels einer Heiz- und/oder Kühleinheit, welche ihre Energie zum Heizen und/oder Kühlen aus einem elektrischen Speicher bezieht, sowie auf ein entsprechendes Kraftfahrzeug mit einer Heiz- und/oder Kühleinheit zur Durchführung des Verfahrens.

Um im Stillstand befindliche Fahrzeuge optimal temperieren zu können, sind derzeit verschiede Vorrichtungen und Verfahren bekannt. So offenbart die DE 197 31 071 A1 eine Anlage zum Temperieren des Fahrzeuginnenraum eines Kraftfahrzeugs im Stillstand, bei dem die im Fahrzeug noch vorhandene Restwärme einer Wärmequelle und Restkälte einer Kältequelle genutzt wird.

Da die Nutzung von Restwärme und/oder Restkälte nur möglich ist, wenn die dafür genutzten Wärmequellen und/oder Kältequellen sich in einem Zustand befinden, in dem sie Wärme und/oder Kälte abgeben können, in der Regel also unmittelbar nach (längerem) Betrieb des Kraftfahrzeugs, sind derartige Systeme oft nicht ausreichend, um eine optimale Temperierung des Fahrzeuginnenraums im Stillstand zu ermöglichen.

Neben den genannten Vorrichtungen zum Temperieren des Fahrzeuginnenraums im Stillstand werden zum Heizen oder Kühlen des Fahrzeugs im Stillstand oft Zuheiz- bzw. Standheizgeräte bzw. elektrisch angetriebene Kühleinrichtungen verwendet, die Ihre Energie in der Regel unter Zuhilfenahme von Verbrennungsmaschinen oder thermischen Energiespeichern erhalten. Derartige Heiz- und/oder Kühleinheit haben einen erheblichen Kraftstoffverbrauch und damit verbunden hohe Schadstoffemissionen.

Neue Fahrzeugkonzepte, insbesondere Hybridfahrzeuge, legen den Ansatz nahe, die notwendige Energie zum Betreiben der Heiz- und/oder Kühleinheiten im Stillstand aus den vorhandenen elektrischen Energiespeichern zu nutzen. So offenbart die DE 10 2005 004 950 A1 eine Klimaanlage für ein Hybridfahrzeug, bei der die Vorklimatisierung mittels eines bereits im System serienmäßig vorhandenen elektrischen Kältemittelverdichters, welcher von einer Traktionsbatterie des Fahrzeugs angesteuert wird, ermöglicht wird. Derartige Systeme haben zwar den Vorteil, dass eine Vorklimatisierung ohne Emissionen aus einem Verbrennungsmotor oder einem Brennstoffheizgerät möglich sind, allerdings ist die Vorklimatisierung aufgrund der Speicherkapazitäten der elektrischen Speicher nur für einen begrenzten Zeitraum möglich. Sobald der Ladezustand unter einem vorgegebenen Grenzwert liegt oder fällt ist keine Vorklimatisierung (mehr) möglich, da ansonsten der Betrieb des Kraftfahrzeugs gefährdet sein könnte. Dies führt zu erheblichen Komforteinbußen für den Fahrer. Aus der gattungsbildenden US 7,055,340 B2 ist bereits ein zweistufiges Verfahren zur Vorklimatisierung des Fahrzeuginnenraums bekannt.

Aufgabe der Erfindung ist es, ein Verfahren und eine Vorrichtung zur Vorklimatisierung eines Kraftfahrzeugs im Stillstand ohne Ausstoß von Emissionen anzugeben, bei dem die Vorklimatisierung für einen möglichst langen bzw. kundenwertigen Zeitraum gewährleistet werden kann.

Diese Aufgabe wird durch ein Verfahren nach Patentanspruch 1 und ein Kraftfahrzeug nach Anspruch 7 gelöst. Vorteilhafte Weiterbildungen ergeben sich aus den abhängigen Ansprüchen.

Grundgedanke der Erfindung ist, dass die Energie zur Vorklimatisierung des Fahrzeuginnenraums aus elektrischen Speichern bezogen wird. Weiter wird davon ausgegangen, dass der Fahrer für den Fall, dass er eine Vorklimatisierung des Fahrzeuginnenraums wünscht, die dazu vorhanden Heiz- und/oder Kühleinheiten vor dem eigentlichen Benutzen des Fahrzeugs aktiviert. Sobald der Fahrer den Fahrzeuginnenraum öffnet, möchte er von der warmen oder kalten Luft angeblasen werden.

Das erfindungsgemäße Verfahren zur Vorklimatisierung eines Kraftfahrzeugs im Stillstand mittels einer Heiz- und/oder Kühleinheit, welche ihre Energie zum Heizen und/oder Kühlen aus einem elektrischen Speicher bezieht, zeichnet sich dadurch aus, dass die Heiz- und/oder Kühleinheit in zumindest zwei Leistungsstufen betrieben werden kann und dass bei einer Aktivierung der Heiz- und/oder Kühleinheit mittels eines fahrzeugexternen Bedienelements die Heiz- und/oder Kühleinheit zuerst in einer ersten Leistungsstufe aktiviert wird. Sind vorgegebene Bedingungen erfüllt, wird in eine zweite Leistungsstufe der Heiz- und/oder Kühleinheit geschaltet, wobei die zweite Leistungsstufe eine größere Heiz- oder Kühlleistung erbringt, als die erste Leistungsstufe.

Das erfindungsgemäße Verfahren bzw. dementsprechend ausgestattete Kraftfahrzeug bietet den Vorteil, dass anfangs nur wenig Energie verbraucht wird und erst später, wenn auf die zweite Leitungsstufe geschaltet wird, mehr Energie verbraucht wird. Dadurch kann der Zeitraum für die Vorklimatisierung verlängert werden.

Dieses Verfahren bietet sich insbesondere bei Kraftfahrzeugen an, die mit einem hybriden Kraftmaschinensystem ausgestattet sind, wobei ein System zum Antreiben der Räder als Elektromotor ausgestaltet ist, der seine Energie aus einem elektrischen Speicher bezieht. Dieser elektrische Speicher wird auch zum Heizen oder Kühlen des Fahrzeuginnenraums im Stillstand verwendet.

Die Aktivierung der Vorklimatisierung mittels des fahrzeugexternen Bedienelements kann auf verschiede Arten erfolgen. Das Bedienelement kann in einer separaten Funkfernbedienung oder in seiner Schlüsseleinheit integriert sein, wobei sowohl ein gemeinsames als auch getrenntes Bedienelement zum Starten eines Heizvorgangs bzw. zum Starten eines Kühlvorgangs vorgesehen sein kann.

Die erste Leistungsstufe kann verschieden ausgestaltet sein. In einer ersten Alternative ist die erste Leistungsstufe derart ausgestaltet, dass lediglich ein Spülvorgang des Fahrzeuginnenraums vorgenommen wird, d. h. die im Fahrzeuginnenraum vorhandene Luft wird aus dem Fahrzeuginnenraum geblasen. Diese Leistungsstufe bietet sich bspw. an, wenn der Fahrzeuginnenraum aufgeheizt ist, und der Fahrer eine Kühlung wünscht. Da diese Leistungsstufe nur sehr wenig Energie benötigt, ist diese Ausgestaltung der Leistungsstufe vorteilhaft, wenn der Ladezustand oder die Kapazität des elektrischen Speichers sehr gering ist, da hierbei kein aktives Abkühlen des Fahrzeuginnenraums erfolgt.

In einer zweiten Alternative kann die erste Leistungsstufe derart ausgestaltet sein, dass in einem ersten Schritt ein Spülvorgang des Fahrzeuginnenraums vorgenommen und anschließend in einem zweiten Schritt die Heiz- und/oder Kühleinheit mit kleiner oder mittlerer Leistung betrieben wird. Diese Ausgestaltung der ersten Leistungsstufe bietet sich an, wenn die Luft im Fahrzeuginnenraum aufgeheizt ist und der Fahrer einen kühlen Fahrzeuginnenraum wünscht und der Ladezustand des elektrischen Speichers ausreichend ist, um ein aktives Kühlen des Fahrzeuginnenraums mit kleiner oder mittlerer Leistung zu ermöglichen.

In einer dritten Alternative kann die erste Leistungsstufe derart ausgestaltet sein, dass ohne vorheriges Spülen des Fahrzeuginnenraums die Heiz- und/oder Kühleinheit mit kleiner oder mittlerer Leistung betrieben wird. Eine derartige Ausgestaltung der ersten Leistungsstufe bietet sich an, wenn der Ladezustand des elektrischen Speichers ausreichend groß ist und ein Spülen des Fahrzeuginnenraums keine Verbesserung im Hinblick auf ein Aufheizen oder Kühlen des Fahrzeuginnenraums im Stillstand bringen würde.

Je nachdem, ob nur eine oder mehrere der eben genannten ersten Leistungsstufen durch die Heiz- oder Kühleinheit ausführbar sind, wird von der Heiz- und/oder Kühleinheit bzw. deren Steuereinheit bei mehreren ausführbaren ersten Leistungsstufen bei Aktivierung der Heiz- und/oder Kühleinheit im Stillstand die entsprechend erste Leistungsstufe in Abhängigkeit von der gewählten Temperierungsart, von der Temperatur im Fahrzeuginnenraum und/oder der Außentemperatur und/oder dem Ladezustand des elektrischen Speichers automatisch ausgewählt.

Vorteilhafterweise ist bei einer ersten Leistungsstufe, die ausschließlich einen Spülvorgang des Fahrzeuginnenraums vornimmt, die zweite Leistungsstufe derart ausgestaltet, dass die Heiz- und/oder Kühleinheit mit kleiner oder mittlerer Leistung betrieben wird und/oder derart, dass die Heiz- und/oder Kühleinheit mit hoher Leistung betrieben wird. Wenn beide Ausgestaltungen der zweiten Leistungsstufe durch die Heiz- oder Kühleinheit ausführbar sind, wird von der Heiz- und/oder Kühleinheit bzw. deren Steuereinheit idealerweise die zweite Leistungsstufe in Abhängigkeit vom Ladezustand des elektrischen Speichers gewählt. Ist der Ladezustand sehr gering, wird als zweite Leistungsstufe diejenige Leistungsstufe gewählt, bei der die Heiz- und/oder Kühleinheit nur mit mittlerer Leistung betrieben wird. Somit wird ein sehr starkes Entladen des elektrischen Speichers und ein damit verbundenes Abschalten der Heiz- und/oder Kühleinheit, falls der Ladezustand an eine vorgegebene unterste Grenze fällt, verhindert.

Bei einer ersten Leistungsstufe, bei der die Heiz- und/oder Kühleinheit mit kleiner oder mittlerer Leistung betrieben wird, kann die zweite Leistungsstufe derart ausgestaltet sein, dass die Heiz- und/oder Kühleinheit mit hoher Leistung betrieben wird. Diese Ausgestaltung ist dann möglich, wenn der Ladezustand des elektrischen Speichers für die Vorklimatisierung mit hoher Leistung für einen vorgegebenen Zeitraum ausreichend ist.

Ein weiterer wesentlicher Punkt der Erfindung liegt darin, einen geeigneten Umschaltzeitpunkt von der ersten Leistungsstufe in die zweite Leistungsstufe anzugeben. Der Umschaltzeitpunkt sollte derart gewählt werden, dass der Fahrer, sobald er in das Fahrzeug einsteigt, das Gefühl vermittelt bekommt, dass seinem Wunsch nach Vorklimatisierung Rechnung getragen wird. Dementsprechend wird in einer vorteilhaften Ausgestaltung der Erfindung dann von der ersten Leistungsstufe in die zweite Leistungsstufe geschaltet, wenn der Kofferraum oder eine Fahrzeugtür, vorzugsweise die Fahrer-Fahrzeugtür entriegelt oder geöffnet wird. Je nach Ausgestaltung des Entriegelungssystems des Kraftfahrzeugs, findet eine Entriegelung des Fahrzeugs statt, wenn der Fahrer ein entsprechendes Bedienelement einer Fernbedienungseinheit betätigt, wenn er bzw. eine Funkeinheit innerhalb eines vorgegebenen Bereichs um das Fahrzeug detektiert wird, oder wenn er das Fahrzeug mittels eines Schlüssels manuell am Schloss einer Tür oder des Kofferraums entriegelt, Ob eine Aktivierung der zweiten Leistungsstufe beim Entriegeln des Fahrzeugs oder beim Öffnen einer Fahrzeugtür bzw. der Fahrer-Fahrzeugtür erfolgt, kann fest vorgegeben werden, oder in Abhängigkeit vom Ladezustand des elektrischen Speichers erfolgen, wobei bei geringem Ladezustand der Umschaltvorgang von der ersten Leistungsstufe in die zweite Leistungsstufe erst möglichst spät erfolgen sollte, vorzugsweise erst beim Öffnen der Fahrertür des Kraftfahrzeugs.

Wird das erfindungsgemäße Verfahren in einem derartigen Kraftfahrzeug eingesetzt, bei dem zum Starten des Kraftfahrzeugs die Energie aus demselben elektrischen Speicher bezogen wird, ist eine Überwachung des Ladezustands des elektrischen Speichers besonders wichtig. In einer vorteilhaften Ausgestaltung des erfindungsgemäßen Verfahrens sollte bei einem Ladezustand des elektrischen Speichers, der unter einem vorgegebenen Grenzwert ist oder fällt, die Heiz- und/oder Kühleinheit nicht aktiviert oder deaktiviert werden, damit der Startvorgang gewährleistet bleibt.

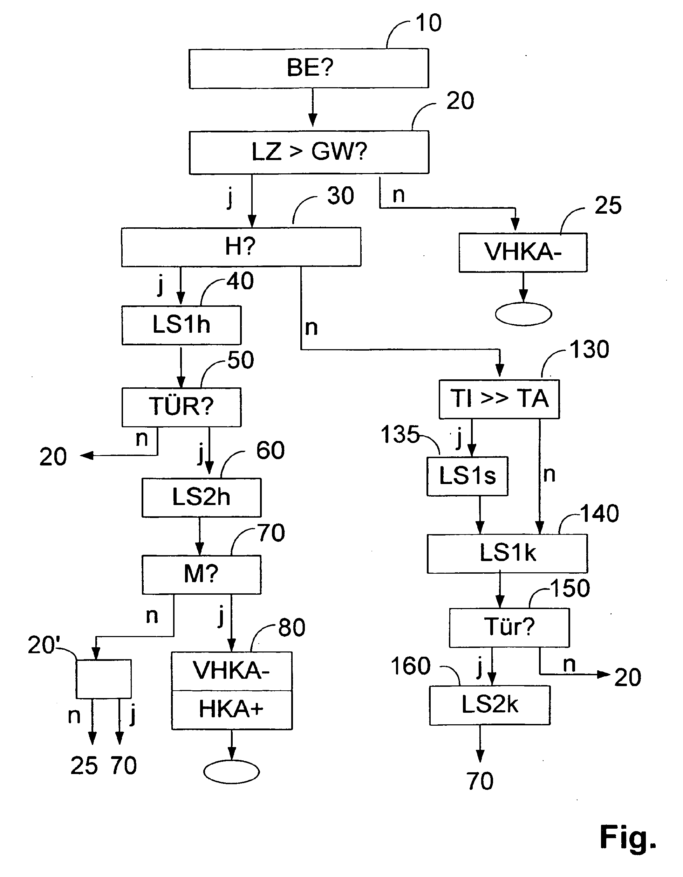

Das erfindungsgemäße Verfahren wird nun anhand eines Ausführungsbeispiels näher erläutert. Dabei zeigt die einzige Figur ein vereinfachtes beispielhaftes Ablaufdiagramm des erfindungsgemäßen Verfahrens zur Vorklimatisierung eines Kraftfahrzeugs im Stillstand mittels einer Heiz-Kühleinheit.

Es wird davon ausgegangen dass die Heiz-Klimaeinheit die Energie zur Vorklimatisierung des Fahrzeuginnenraums aus einem elektrischen Speicher bezieht, der zugleich für das Starten des Kraftfahrzeugs und teilweise auch für einen Elektromotor verwendet wird. Das erfindungsgemäße Verfahren ist in einer Steuereinheit zur Steuerung und/oder Regelung der Heiz-Klimaeinheit als Routine implementiert.

Das Verfahren zur Vorklimatisierung eines Kraftfahrzeugs im Stillstand wird im Schritt 10 gestartet, wenn vom Fahrer mittels eines fahrzeugexternen Bedienelements BE die Heiz-Kühleinheit zur Vorklimatisierung seines Fahrzeugs im Stillstand aktiviert wird. Das Bedienelement kann in einer separaten Funkfernbedienung oder in seiner Schlüsseleinheit integriert sein, wobei ein gemeinsames oder getrenntes Bedienelement zum Starten eines Heizvorgangs bzw. zum Starten eines Kühlvorgangs vorgesehen sein kann. Der Einfachheit halber wird im Folgenden nur von einem Bedienelement BE gesprochen.

Nachdem der Fahrer durch Betätigung des Bedienelements BE seinen Wunsch zur Vorklimatisierung zum Ausdruck gebracht hat, wird im Schritt 20 überprüft, ob der Ladezustand LZ des zur Vorklimatisierung verwendeten elektrischen Speichers einen vorgegebenen Grenzwert GW überschreitet. Der Grenzwert GW wird dabei so vorgegeben, dass eine Aktivierung der Heiz-Klimaeinheit VHKA zu keiner Beeinträchtigung des Startvorgangs des Fahrzeugs führt. Unterschreitet der Ladezustand LZ des elektrischen Speichers den vorgegebenen Grenzwert GW, wird zum Schritt 25 übergegangen. Die Heizklimaeinheit VHKA wird nicht aktiviert bzw. falls sie vorher bereits aktiviert war, wird sie im Schritt 25 deaktiviert. Das Verfahren bzw. die Routine wird beendet.

Überschreitet der Ladezustand LZ des elektrischen Speichers den Grenzwert GW, wird im Schritt 30 überprüft, ob der Fahrer ein Aufheizen H oder Abkühlen des Fahrzeuginnenraums wünscht. Dies kann z.B. dadurch festgestellt werden, in dem überprüft wird, ob der Fahrer das Bedienelement BE zum Heizen oder das Bedienelement BE zum Kühlen betätigt hat.

Wünscht der Fahrer ein Aufheizen H des Fahrzeuginnenraums, wird im Schritt 40 eine erste Heiz-Leistungsstufe LS1 h der Heiz-Klimaeinheit VHKA aktiviert. Diese erste Heiz-Leistungsstufe LS1h ist derart ausgestaltet, dass die Heiz-Klimaeinheit VHKA den Fahrzeuginnenraum mit mittlerer Leistung aufheizt. Nach Aktivierung der ersten Heiz-Leistungsstufe LS1 h wird im nächsten Schritt 50 abgefragt, ob die Fahrertür TÜR geöffnet wird. Solange die Fahrertür TÜR nicht geöffnet wird, springt die Routine immer wieder zum Schritt 20 zurück. Dadurch wird kontinuierlich der Ladezustand LZ des elektrischen Speichers abgefragt, so dass die Vorklimatisierung ggf. unterbrochen werden kann, falls der Ladezustand LZ unter den Grenzwert GW fällt. Ist der Ladezustand LZ ausreichend, wird der Fahrzeuginnenraum durch die in der ersten Heiz-Leistungsstufe LS1 h aktivierte Heiz-Klimaeinheit VHKA aufheizt.

Sobald im Schritt 50 erkannt wird; dass die Fahrertür TÜR des Fahrzeugs geöffnet wird, wird zum Schritt 60 übergegangen. Dort wird eine zweite Heiz-Leistungsstufe LS2h der Heiz-Klimaeinheit VHKA aktiviert. Diese zweite Heiz-Leistungsstufe LS2h ist derart ausgestaltet, dass die Heiz-Klimaeinheit VHKA den Fahrzeuginnenraum nun mit hoher Leistung aufheizt. Nach Aktivierung der zweiten Heiz-Leistungsstufe LS2h wird im nächsten Schritt 70 abgefragt, ob das Fahrzeug bzw. der Motor M gestartet wurde. Solange der Motor M nicht gestartet wurde, springt die Routine zum Schritt 20', der entsprechend dem Schritt 20 eine Überprüfung des Ladezustands LZ des elektrischen Speichers vornimmt. Reicht die Ladekapazität nicht mehr aus, unterschreitet, also der Ladezustand LZ den vorgegebenen Grenzwert GW, wird zum Schritt 25 gesprungen, dort die Vorklimatisierung deaktiviert und dann die Routine beendet. Reicht die Ladekapazität aus, überschreitet also der Ladezustand LZ den vorgegebenen Grenzwert GW, wird wieder in den Schritt 70 gesprungen und die Vorklimatisierung mit der zweiten Heiz-Leistungsstufe LS2h aufrechterhalten. Sobald der Motor M gestartet wird, wird vom Schritt 70 in den Schritt 80 übergangen, dort die Vorklimatisierung VHKA beendet und die herkömmliche Klimatisierung HKA aktiviert.

Wünscht der Fahrer kein Aufheizen H des Fahrzeuginnenraums, sondern ein Kühlen, wird im Schritt 130 die Temperatur im Fahrzeuginnenraum TI überprüft. Ist die Temperatur im Fahrzeuginnenraum Tl sehr viel größer, als die Außentemperatur TA, wird im Schritt 135 eine erste Vor-Kühlleistungsstufe LS1s aktiviert, die einen Spülvorgang des Fahrzeuginnenraums einleitet. Nach dem Spülvorgang wird im Schritt 140 die eigentliche erste Kühlleistungsstufe LS1 k aktiviert. Diese erste Kühl-Leistungsstufe LS1 k ist derart ausgestaltet, dass die Heiz-Klimaeinheit VHKA den Fahrzeuginnenraum mit mittlerer Leistung abkühlt.

Ist die Temperatur im Fahrzeuginnenraum TI nicht sehr viel größer, als die Außentemperatur TA, aus dem Schritt 130 gleich in den Schritt 140 gesprungen, und (ohne Durchführung eines Spülvorgangs LS1s des Fahrzeuginnenraums) gleich die erste Kühlleistungsstufe LS1 k aktiviert.

Nach Aktivierung der ersten Kühl-Leistungsstufe LS1 k wird im nächsten Schritt 150 abgefragt, ob die Fahrertür TÜR geöffnet wird. Solange die Fahrertür TÜR nicht geöffnet wird, springt die Routine immer wieder zum Schritt 20 zurück. Dadurch wird kontinuierlich der Ladezustand LZ des elektrischen Speichers abgefragt, so dass die Vorklimatisierung ggf. unterbrochen werden kann, falls der Ladezustand LZ unter den Grenzwert GW fällt. Ist der Ladezustand LZ ausreichend, wird der Fahrzeuginnenraum weiterhin durch die in der ersten Kühl-Leistungsstufe LS1 s aktivierte Heiz-Klimaeinheit VHKA abgekühlt.

Sobald im Schritt 150 erkannt wird, dass die Fahrertür TÜR des Fahrzeugs geöffnet wird, wird zum Schritt 160 übergegangen. Dort wird eine zweite Kühl-Leistungsstufe LS2k der Heiz-Klimaeinheit VHKA aktiviert. Diese zweite Kühl-Leistungsstufe LS2k ist derart ausgestaltet, dass die Heiz-Klimaeinheit VHKA den Fahrzeuginnenraum nun mit hoher Leistung abkühlt. Nach Aktivierung der zweiten Kühl-Leistungsstufe LS2k wird zum Schritt 70 übergangen und die Routine - wie bereits oben beschrieben- weitergeführt bzw. beendet. Dadurch wird ein optimales Kühlen des Fahrzeuginnenraums unter Berücksichtigung des Fahrzeuginnenraums gewährleistet.

Das hier beschriebene Verfahren soll nur ein stark vereinfachtes Beispiel sein. Natürlich können noch weitere Systemparameter abgefragt und dementsprechend erforderliche Systemeingriffe vorgenommen werden. Diese Betriebsstrategie kann auch mit anderen Strategien, z. B. mit Belüftungsstrategien über ein Absenken der Fenster und/oder mit Strategien zur Batteriekühlung im Stillstand gekoppelt werden, wobei jedoch immer auf den Ladezustand des elektrischen Speichers geachtet werden muss.

## Patentansprüche

1. Verfahren zur Vorklimatisierung eines Kraftfahrzeugs im Stillstand mittels einer Heiz- und/oder Kühleinheit, welche ihre Energie zum Heizen und/oder Kühlen aus einem elektrischen Speicher bezieht, wobei bei Aktivierung der Heiz- und/oder Kühleinheit mittels eines fahrzeugexternen Bedienelements die Heiz- und/oder Kühleinheit aktiviert wird, wobei die Heiz- und/oder Kühleinheit (VHKA) in zumindest zwei Leistungsstufen (LS1h, LS1s, LS1k, LS2h, LS2k) betrieben werden kann und wobei bei einer Aktivierung im Stillstand die Heiz und/oder Kühleinheit (VHKA) in einer ersten Leistungsstufe (LS1h, LS1s, LS1k) aktiviert wird und in Abhängigkeit von vorgegebenen Bedingungen (50, 150) von der ersten Leistungsstufe (LS1h, LS1s, LS1k) in eine zweite Leistungsstufe (LS2h, LS2k) der Heiz- und/oder Kühleinheit (VHKA) geschaltet wird, **dadurch gekennzeichnet, dass** von der ersten Leistungsstufe (LS1h, LS1 s, LS1 k) in die zweite Leistungsstufe (LS2h, LS2k) geschaltet wird, wenn eine Fahrzeugtür (TÜR), vorzugsweise die Fahrer-Fahrzeugtür entriegelt oder geöffnet wird.

2. Verfahren nach Anspruch 1, **dadurch gekennzeichnet, dass** die erste Leistungsstufe derart ausgestaltet ist, dass ausschließlich ein Spülvorgang des Fahrzeuginnenraums vorgenommen wird (LS1s), oder die Heiz- und/oder Kühleinheit mit kleiner oder mittlerer Leistung betrieben wird (LS1 h, LS1k), oder in einem ersten Schritt ein Spülvorgang des Fahrzeuginnenraums vorgenommen (LS1s) und in einem zweiten Schritt die Heiz- und/oder Kühleinheit mit kleiner oder mittlerer Leistung betrieben wird (LS 1 k).

3. Verfahren nach Anspruch 2, **dadurch gekennzeichnet, dass** die erste Leistungsstufe (LS1h, LS1s) in Abhängigkeit von der Temperatur im Fahrzeuginnenraum (Tl) und/oder der Außentemperatur (TA) und/oder dem Ladezustand (LZ) des elektrischen Speichers gewählt wird.

4. Verfahren nach einem der vorangegangenen Ansprüche, **dadurch gekennzeichnet, dass** bei einer ersten Leistungsstufe, die ausschließlich einen Spülvorgang des Fahrzeuginnenraums vornimmt, die zweite Leistungsstufe derart ausgestaltet ist, dass die Heiz- und/oder Kühleinheit mit kleiner oder mittlerer Leistung betrieben wird und/oder dass die Heiz- und/oder Kühleinheit mit hoher Leistung betrieben wird.

5. Verfahren nach einem der vorangegangenen Ansprüche, **dadurch gekennzeichnet, dass** bei einer ersten Leistungsstufe, bei der die Heiz- und/oder Kühleinheit mit kleiner oder mittlerer Leistung betrieben wird (LS1h, LS1k), die zweite Leistungsstufe derart ausgestaltet ist, dass die Heiz- und/oder Kühleinheit mit hoher Leistung betrieben wird (LS2h, LS2k).

6. Verfahren nach einem der vorangegangenen Ansprüche, **dadurch gekennzeichnet, dass** bei einem Ladezustand (LZ) des elektrischen Speichers, der unter einem vorgegebenen Grenzwert (GW) ist oder fällt, die Heiz- und/oder Kühleinheit (VHKA) nicht aktiviert oder deaktiviert (VHKA-) wird.

7. Kraftfahrzeug mit einer Heiz- und/oder Kühleinheit (VHKA) zur Vorklimatisierung eines Kraftfahrzeugs im Stillstand, wobei mit der Heiz- und/oder Kühleinheit (VHKA) ein Verfahren nach einem der Ansprüche 1 bis 6 durchführbar ist.

## Claims

1. A method for pre-climatising a stationary motor vehicle by means of a heating and/or cooling unit, which draws its energy for heating and/or cooling from an electric storage unit, wherein, upon activation of the heating and/or cooling unit by means of an operating element external to the vehicle, the heating and/or cooling unit is activated, wherein the heating and/or cooling unit (VHKA) can be operated in at least two power stages (LS1 h, LS1 s, LS1 k, LS2h, LS2k) and wherein, upon an activation when stationary, the heating and/or cooling unit (VHKA) is activated in a first power stage (LS1h, LS1s, LS1k) and, depending on predetermined conditions (50, 150), a switch is made from the first power stage (LS1h, LS1s, LS1k) to a second power stage (LS2h, LS2k) of the heating and/or cooling unit (VHKA), **characterised in that** the switch is made from the first power stage (LS1h, LS1 s, LS1 k) to the second power stage (LS2h, LS2k) when a vehicle door (DOOR), preferably the driver's vehicle door, is unlocked or opened.

2. A method according to claim 1, **characterised in that** the first power stage is configured such that exclusively a flushing process of the vehicle interior is carried out (LS1s), or the heating and/or cooling unit is operated at low or average power (LS1h, LS1k), or a flushing process of the vehicle interior is carried out in a first step (LS1 s) and the heating and/or cooling unit is operated at low or average power in a second step (LS1 k).

3. A method according to claim 2, **characterised in that** the first power stage (LS1h, LS1s) is selected depending on the temperature in the vehicle interior (TI) and/or the external temperature (TA) and/or the charge state (LZ) of the electric storage unit.

4. A method according to any one of the preceding claims, **characterised in that** with a first power stage, which exclusively carries out a flushing process of the vehicle interior, the second power stage is configured such that the heating and/or cooling unit is operated at low or average power and/or **in that** the heating and/or cooling unit is operated at a high power.

5. A method according to any one of the preceding claims, **characterised in that** with a first power stage, in which the heating and/or cooling unit is operated at low or average power (LS1h, LS1k), the second power stage is configured in such a way that the heating and/or cooling unit is operated at high power (LS2h, LS2k).

6. A method according to any one of the preceding claims, **characterised in that** with a charge state (LZ) of the electric storage unit, which is or falls below a predetermined limit value (GW), the heating and/or cooling unit (VHKA) is not activated or is deactivated (VHKA-).

7. A motor vehicle with a heating and/or cooling unit (VHKA) for pre-climatising a stationary vehicle, wherein a method according to any one of claims 1 to 6 can be carried out with the heating and/or cooling unit (VHKA).

## Revendications

1. Procédé de pré-climatisation d'un véhicule à l'arrêt, à l'aide d'une unité de chauffage et/ou de refroidissement, recevant de l'énergie de chauffage et/ou de refroidissement d'un accumulateur électrique,
- l'activation de l'unité de chauffage et/ou de refroidissement se faisant à l'aide d'un élément de commande externe au véhicule qui active l'unité de chauffage et/ou de refroidissement,
- l'unité de chauffage et/ou de refroidissement (VHKA) fonctionnant suivant au moins deux niveaux de puissance (LS1h, LS1s, LS1k, LS2h, LS2k), et
- si l'activation est faite à l'arrêt, l'unité de chauffage et/ou de refroidissement (VHKA) est activée suivant un premier niveau de puissance (LS1h, LS1s, LS1k) et en fonction de conditions prédéfinies (50, 150), on commute l'unité de chauffage et/ou de refroidissement (VHKA) du premier niveau de puissance (LS1h, LS1s, LS1k) dans un second niveau de puissance (LS2h, LS2k),
procédé **caractérisé en ce que**
on commute du premier niveau de puissance (LS1h, LS1s, LS1k) au second niveau de puissance (LS2h, LS2k) lorsqu'une portière du véhicule (TÜR), notamment la portière du conducteur, est déverrouillée ou est ouverte.

2. Procédé selon la revendication 1,
**caractérisé en ce que**
le premier niveau de puissance est réalisé pour assurer exclusivement une phase de ventilation de l'habitacle du véhicule (LS1s), ou encore l'unité de chauffage et/ou de refroidissement fonctionne avec une puissance réduite ou moyenne (LS1h, LS1k), ou dans une première étape, on effectue une phase de ventilation de l'habitacle du véhicule (LS1s) et dans une seconde étape, on fait fonctionner l'unité de chauffage et/ou de refroidissement avec une puissance réduite ou moyenne (LS1k).

3. Procédé selon la revendication 2,
**caractérisé en ce que**
l'on choisit le premier niveau de puissance (LS1h, LS1s) en fonction de la température (TI) régnant dans l'habitacle et/ou de la température extérieure (TA) et/ou de l'état de charge (LZ) d'un accumulateur électrique.

4. Procédé selon l'une quelconque des revendications précédentes,
**caractérisé en ce que**
pour le premier étage de puissance qui réalise exclusivement une phase de ventilation de l'habitacle du véhicule, le second étage de puissance est conçu pour faire fonctionner l'unité de chauffage et/ou de refroidissement à puissance réduite ou moyenne et/ou l'unité de chauffage et/ou de refroidissement fonctionne à puissance élevée.

5. Procédé selon l'une quelconque des revendications précédentes,
**caractérisé en ce que**
pour le premier niveau de puissance pour lequel l'unité de chauffage et/ou de refroidissement fonctionne à puissance faible ou moyenne (LS1h, LS1k), le second niveau de puissance est réalisé pour que l'installation de chauffage et/ou de refroidissement fonctionne à puissance plus élevée (LS2h, LS2k).

6. Procédé selon l'une quelconque des revendications précédentes,
**caractérisé en ce que**
pour un état de charge (LZ) de l'accumulateur électrique inférieur à une valeur limite (GW) prédéfinie ou passant en dessous de cette valeur limite, l'unité de chauffage et/ou de refroidissement (VHKA) n'est pas activée ou sera neutralisée (VHKA-).

7. Véhicule automobile équipé d'une unité de chauffage et/ou de refroidissement (VHKA) pour la pré-climatisation du véhicule à l'arrêt,
l'unité de chauffage et/ou de refroidissement (VHKA) mettant en oeuvre un procédé selon l'une des revendications 1 à 6.
